# EUROPÄISCHE PATENTANMELDUNG

(11) **EP 1 902 809 A1**
(43) Veröffentlichungstag der Anmeldung: **26.03.2008**
(21) Anmeldenummer: 07116855.3
(22) Anmeldetag: 20.09.2007
(51) Int. Cl.: B23K 11/31

(54) **Elektrodenarm-Anordnung sowie damit ausgestattete Schweißzange**

(30) Priorität: 22.09.2006 DE 202006014609 U
(71) Anmelder: Nimak GmbH, 57537 Wissen (DE)
(72) Erfinder: NICKEL, Paul, 57537, Wissen (DE)
(74) Vertreter: Patentanwälte Dr. Solf & Zapf

(57) **Zusammenfassung**

Die Erfindung betrifft eine Elektrodenarm-Anordnung für eine Schweißzange (1) mit zwei zwischen sich ein Zangenfenster (8) begrenzenden Elektrodenarmen (4, 6), wobei jeder Elektrodenarm (4, 6) ein Anschlussende (10, 12) zur Befestigung an einer Grundkörpereinheit (2) der Schweißzange (1) aufweist. Zumindest bei einem der Elektrodenarme (4/6) ist das Anschlussende (10/12) als separates Anschlussteil (14/16) ausgebildet, wobei der Elektrodenarm (4/6) mit dem Anschlussteil (14/16) derart über Winkeleinstellmittel (18) verbunden oder verbindbar ist, dass das Zangenfenster (8) bezüglich Form und/oder Größe variabel ist.

## Beschreibung

Die vorliegende Erfindung betrifft eine Elektrodenarm-Anordnung für eine Schweißzange mit zwei zwischen sich ein sogenanntes Zangenfenster begrenzenden Elektrodenarmen, wobei jeder Elektrodenarm ein Anschlussende zur Befestigung an einer Grundkörpereinheit der Schweißzange sowie ein gegenüberliegendes freies Elektrodenhalterende aufweist.

Ferner betrifft die Erfindung auch eine Schweißzange mit einer solchen Elektrodenarm-Anordnung, und zwar in einer Ausführung als X- oder L-Zange oder als C-Zange.

Schweißzangen werden in vielen Bereichen der Herstellungstechnik, insbesondere im Automobilbau, dazu verwendet, metallische Bauteile durch elektrisches Punktschweißen (Widerstandsschweißen) zu verbinden. Dazu tragen die Elektrodenarme an ihren freien Enden Schweißelektroden, die für den jeweiligen Punktschweißvorgang durch Bewegung des einen Elektrodenarms (sogenannter Move-Arm) gegen den anderen, zumeist unbeweglichen Elektrodenarm (sogenannter Fix-Arm) unter Zwischenlage der zu verschweißenden Bauteile zusammengeführt und mit einer Anpresskraft beaufschlagt werden. Dabei wird ein elektrischer Schweißstrom über die Elektrodenarme und die Elektroden durch die Bauteile geführt, die dadurch erhitzt und stoffschlüssig verbunden werden. Die Elektrodenarme müssen in Anpassung an den jeweiligen Einsatz so geformt sein, dass das zwischen ihnen gebildete Zangenfenster ausreichend groß ist, um bestimmte Bauteilbereiche kollisionsfrei umgreifen oder übergreifen zu können. Außerdem sind auch störende Bauteilbereiche außerhalb des Zangenfensters zu berücksichtigen. Hierbei wird von "Störgeometrien" gesprochen, die je nach Einsatz sehr unterschiedlich sein können. Deshalb mußten bisher die Elektrodenarme jeweils in Anpassung an die zu erwartenden Störgeometrien individuell gestaltet werden. Dies führt aber zu einem großen Aufwand, zumal bei großen Störgeometrien auch entsprechend größere Grundkörpereinheiten erforderlich waren.

Der vorliegenden Erfindung liegt die Aufgabe zugrunde, eine einfache und kostengünstige Anpassung an unterschiedliche einsatzspezifische Störgeometrien vornehmen zu können.

Erfindungsgemäß wird dies bei einer Elektrodenarm-Anordnung gemäß dem Anspruch 1 dadurch erreicht, dass zumindest bei einem der Elektrodenarme dessen Anschlussende als separates Anschlussteil ausgebildet ist, wobei der Elektrodenarm mit dem Anschlussteil derart über Winkeleinstellmittel verbunden oder verbindbar ist, dass das Zangenfenster bezüglich Form und/oder Größe variabel ist.

Erfindungsgemäß wird somit eine Art Baukastensystem mit nur wenigen, stets gleichen, aber universell für verschiedene Einsatzfälle verwendbaren Bauteilen geschaffen, mit denen eine Anpassung an die jeweiligen einsatzspezifischen Störgeometrien erst bei der Montage der Schweißzange durch entsprechende Einstellung der Winkeleinstellmittel vorzunehmen ist. Dadurch können auch für Einsätze mit größeren Störgeometrien kleine, kostengünstigere Grundkörpereinheiten eingesetzt werden.

Die Erfindung bezieht sich ferner auf eine Schweißzange mit einer erfindungsgemäßen Elektrodenarm-Anordnung. Die Schweißzange kann als X- oder L-Zange oder als C-Zange ausgebildet sein.

Schließlich wird Schutz auch für die erfindungsgemäßen Einzelteile (als Ersatzteile) beansprucht.

Weitere vorteilhafte Ausgestaltungsmerkmale der Erfindung sind in den abhängigen Ansprüche sowie der folgenden Beschreibung enthalten.

Anhand von bevorzugten, in der Zeichnung veranschaulichten Ausführungsbeispielen soll die Erfindung genauer erläutert werden. Dabei zeigen:
- Fig. 1: eine Perspektivansicht einer ersten Ausführung einer Schweißzange mit einer erfindungsgemäßen Elektrodenarm-Anordnung, wobei aber die eigentlichen Elektrodenarme nur teilweise dargestellt sind,
- Fig. 2: eine vergrößerte Perspektivansicht auf den Bereich II in Fig. 1,
- Fig. 3: eine weitere Perspektivansicht ähnlich Fig. 2, wobei ein Bestandteil der Erfindung weggelassen ist,
- Fig. 4: eine Perspektivansicht eines erfindungsgemäßen Anschlussteils in einer ersten Ausführung für einen sogenannten Move-Arm,
- Fig. 5: eine Seitenansicht eines erfindungsgemäßen Anschlussteils in einer zweiten Ausführung für einen Fix-Arm,
- Fig. 6: eine Ansicht des Anschlussteils in Pfeilrichtung VI gemäß Fig. 5,
- Fig. 7: unterschiedliche schematische Seitenansichten jeweils auf den Bereich der Elektrodenarm-Anschlussteile und zwar
- Fig. 7a: für eine X-Zange mit Adapterfunktion für sogenannte Rundarme,
- Fig. 7b: für eine C-Zange ebenfalls mit Adapterfunktion für einen Rundarm,
- Fig. 7c: für eine X-Zange mit sogenannten Rechteckarmen und
- Fig. 7d: für eine C-Zange mit Fix-Arm als Rechteckarm.

In den verschiedenen Figuren der Zeichnung sind gleiche Teile stets mit den gleichen Bezugszeichen versehen und werden daher in der Regel jeweils nur einmal beschrieben.

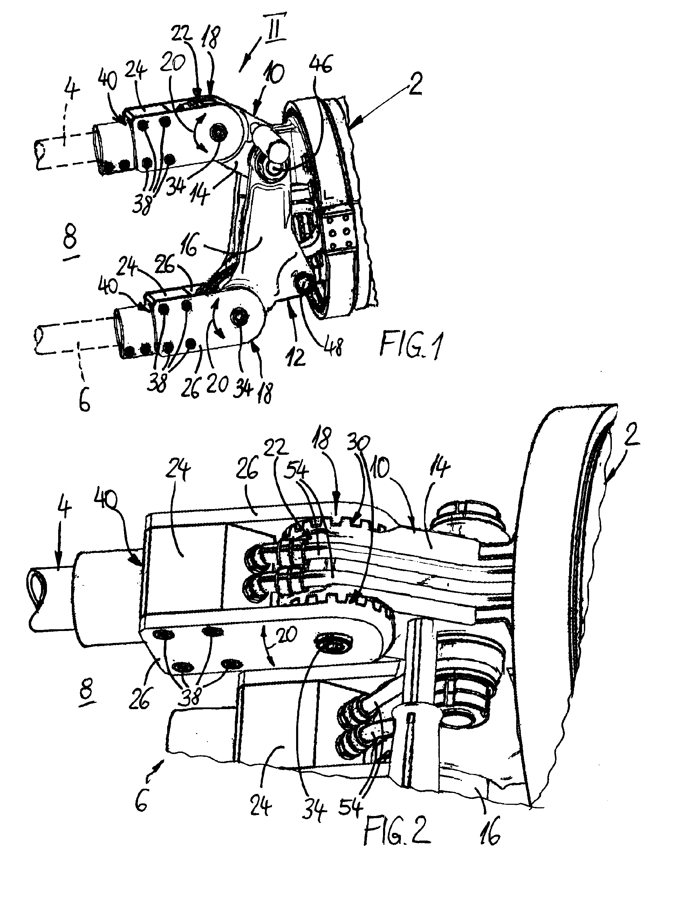

In Fig. 1 ist beispielhaft eine Schweißzange 1 in einer Ausführung als Handschweißzange, d. h. handgeführte Schweißzange insbesondere für den Automobilbau, in der sogenannten X-Bauform dargestellt. Die Schweißzange 1 besteht aus einer Grundkörpereinheit 2 und einer Elektrodenarm-Anordnung mit zwei Elektrodenarmen 4 und 6, die jeweils nur teilweise und in Fig. 1 zudem nur gestrichelt eingezeichnet sind. Die Elektrodenarme 4, 6 begrenzen zwischen sich ein sogenanntes Zangenfenster 8. Die Grundkörpereinheit 2 enthält bestimmte, nicht näher dargestellte Bauteile zur Halterung der Elektrodenarme 4, 6, zum Antrieb zumindest eines der beiden Elektrodenarme, d. h. des sogenannten Move-Arms 4 relativ zum Fix-Arm 6, sowie eine Einrichtung zur Versorgung von nicht dargestellten Schweißelektroden der Elektrodenarme 4, 6 mit einem elektrischen Schweißstrom.

Jeder Elektrodenarm 4, 6 weist ein Anschlussende 10 bzw. 12 zur mechanischen Befestigung an der Grundkörpereinheit 2 sowie gegenüberliegend ein nicht dargestelltes freies Elektrodenhalterende mit einer Punktschweißelektrode auf.

Erfindungsgemäß ist nun zumindest bei einem der Elektrodenarme 4, 6 dessen Anschlussende 10 bzw. 12 als separates, vom eigentlichen Elektrodenarm 4, 6 getrenntes Anschlussteil 14 bzw. 16 ausgebildet. Dazu wird insbesondere auf die gesonderten Darstellungen in Fig. 4 bis 6 verwiesen. Der jeweilige Elektrodenarm 4, 6 ist mit dem zugehörigen Anschlussteil 14, 16 derart über Winkeleinstellmittel 18 verbunden oder verbindbar, dass das Zangenfenster 8 bzgl. Form und/oder Größe variabel einstellbar ist. Dies dient zur Anpassung an eine sogenannte Störgeometrie im jeweiligen Einsatzbereich und damit zur Vermeidung von Kollisionen mit umliegenden Bauteilen. Die erfindungsgemäße Winkeleinstellung wird in der Zeichnung durch Doppelpfeile 20 verdeutlicht. Hierbei erfolgt die Winkelverstellung jeweils um Stellachsen, die senkrecht zu einer von den zwei Elektrodenarmen 4 und 6 gemeinsam definierten Zangenebene verlaufen.

Zweckmäßig können die Winkeleinstellmittel 18 zur stufenlosen oder stufigen Winkeleinstellung mit Kraft- und/oder Formschlussverbindung ausgebildet sein. In den bevorzugten Ausführungen handelt es sich um eine stufige Winkeleinstellung mit Formschluss.

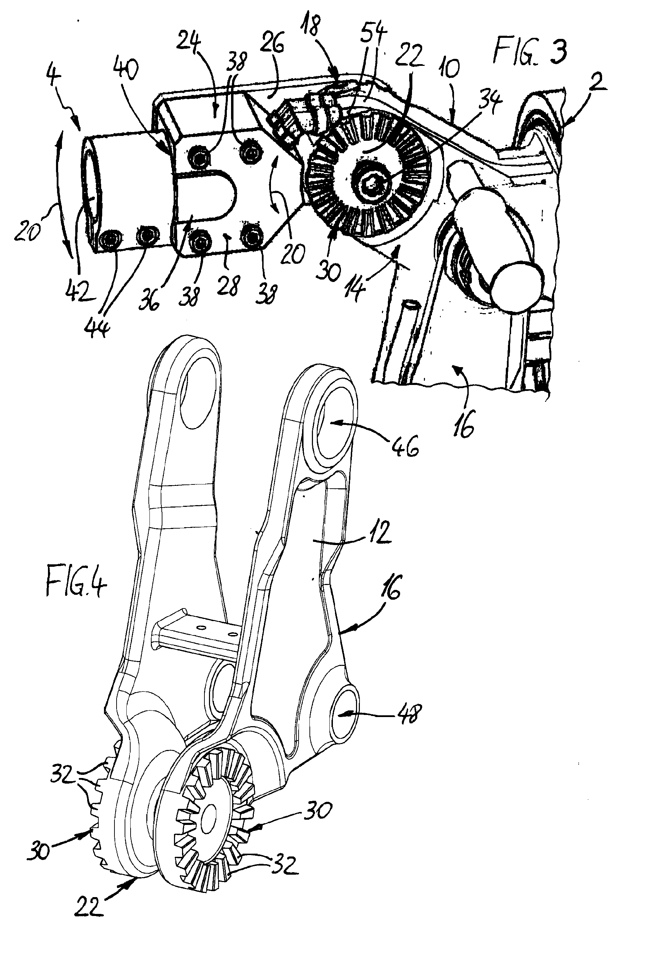

Jedes Anschlussteil 14, 16 weist auf seiner dem üblichen Elektrodenarm-Anschlussende 10 bzw. 12 gegenüberliegenden Seite ein Verbindungsende 22 auf, welches mit einem Verbindungsende 24 des jeweiligen Elektrodenarms 4, 6 in einer benachbart hintereinanderliegenden Anordnung (vgl. Fig. 2 und 3) über zwei seitliche, einander parallel gegenüberliegende und gegeneinander verspannbare Klemmplatten 24 verbunden oder verbindbar ist. Jede Klemmplatte 26 überdeckt dabei bereichsweise, etwa mit je einer Hälfte ihrer Fläche die beiden Verbindungsenden 22 und 24. Entsprechend der parallelen Anordnung der beiden Klemmplatten 26 weist auch das Verbindungsende 24 des jeweiligen Elektrodenarms 4, 6 zwei gegenüberliegende parallele Anlageflächen 28 (siehe dazu insbesondere Fig. 3) und dazu insbesondere einen im Wesentlichen rechteckigen Querschnitt auf. Weiterhin ist jede Klemmplatte 26 mit dem Verbindungsende 22 des jeweiligen Anschlussteils 14 bzw. 16 formschlüssig über korrespondierende, ineinander greifende Verzahnungen 30 zur stufigen Winkeleinstellung verbunden oder verbindbar. Wie sich insbesondere aus Fig. 3, 4 und 5 ergibt, handelt es sich bei den Verzahnungen 30 um Planverzahnungen mit Radialzähnen 32 ähnlich einer sogenannten Hirth-Verzahnung, aber vorzugsweise mit Trapezzähnen. Dabei werden die Verzahnungen 30 über eine zentrale Spannschraube 34 verspannt.

Auf der anderen Seite ist jede Klemmplatte 26 mit dem Verbindungsende 24 des jeweiligen Elektrodenarms 4, 6 bevorzugt ebenfalls formschlüssig über korrespondierende, ineinander greifende Passmittel 36 zur Kippmomentaufnahme spielfrei verbunden oder verbindbar. Gemäß Fig. 3 können als Passmittel 36 auf den Anlageflächen 28 des Verbindungsendes 24 Vorsprünge nach Art einer sogenannten Passfeder angeordnet sein, die in entsprechende, korrespondierende Vertiefungen auf den Innenflächen der Klemmplatten 26 eingreifen. Zum Verspannen der Klemmplatten 26 gegen das Verbindungsende 24 können mehrere, beispielsweise jeweils vier Spannschrauben 38 vorgesehen sein.

Bei den in Fig. 7 c und Fig. 7 d veranschaulichten Ausführungen ist der Elektrodenarm 4 bzw. 6 mit seinem Verbindungsende 24 unmittelbar zwischen den Klemmplatten 26 gehalten. Bei diesen Ausführungen sind die Elektrodenarme 4, 6 als sogenannte Rechteckarme ausgeführt, die im Bereich des Verbindungsendes 24 ohnehin einen rechteckigen Querschnitt mit zwei gegenüberliegenden, parallelen Anlageflächen 28 aufweisen.

Bei den übrigen Ausführungen ist in vorteilhafter Ausgestaltung der Erfindung vorgesehen, dass das Verbindungsende 24 des jeweiligen Elekrodenarms 4, 6 Bestandteil eines separaten Adapterteils 40 ist. Dies bedeutet, dass der jeweilige Elektrodenarm 4, 6 in diesem Bereich nochmals unterteilt ist. Diese Ausführung eignet sich insbesondere für sogenannte Rundarme, d. h. für Elektrodenarme 4, 6 mit etwa kreisförmigem Querschnitt. Dazu weist das Adapterteil 40 auf seiner dem Verbindungsende 24 gegenüberliegenden Seite einen Armanschluss 42 insbesondere in Form einer Steckaufnahme für den im Querschnitt etwa kreisförmigen Elektrodenarm 4, 6 auf. Zur klemmenden, kraftschlüssigen Halterung kann der Armanschluss 42 mit Spannschrauben 44 ausgestattet sein.

Um eine starre, spielfreie Halterung und Abstützung der Elektrodenarme 4, 6 zu gewährleisten, sind die Verzahnungen 30 des Verbindungsendes 22 des jeweiligen Anschlussteils 14 bzw. 16 und der Klemmplatten 26 für einen spielfreien Eingriff im verspannten Zustand ausgelegt. In bevorzugter Ausgestaltung kann das Anschlussteil 14 bzw. 16 gänzlich oder zumindest im Bereich des Verbindungsendes 22 aus einem relativ weichen, plastisch verformbaren Metall, bevorzugt Kupfer, bestehen. Die Verzahnungen 30 sind hierbei derart dimensioniert, dass beim Verspannen der Klemmplatten 26 durch plastische Verformung im Zahnbereich eine Spielfreiheit der Verzahnungen 30 erreicht wird.

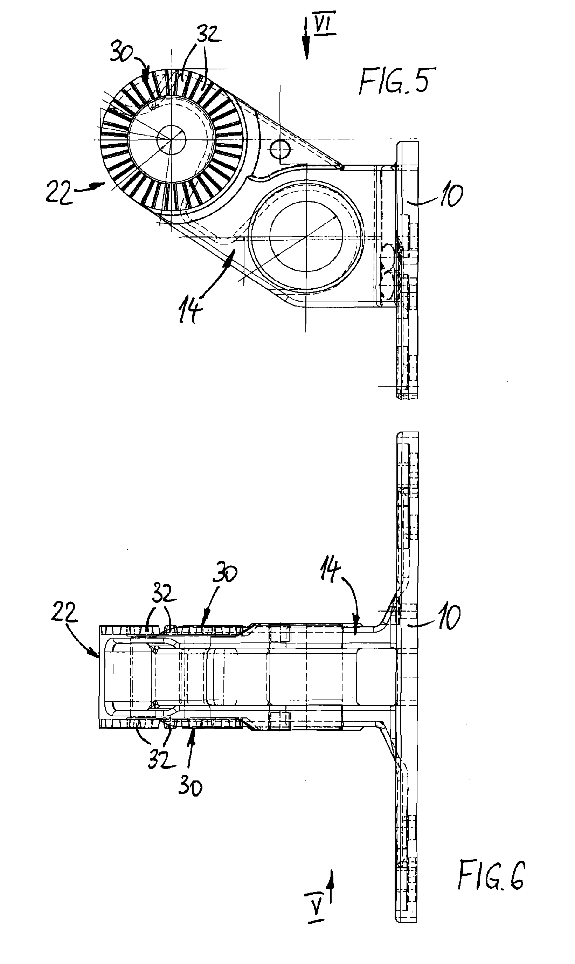

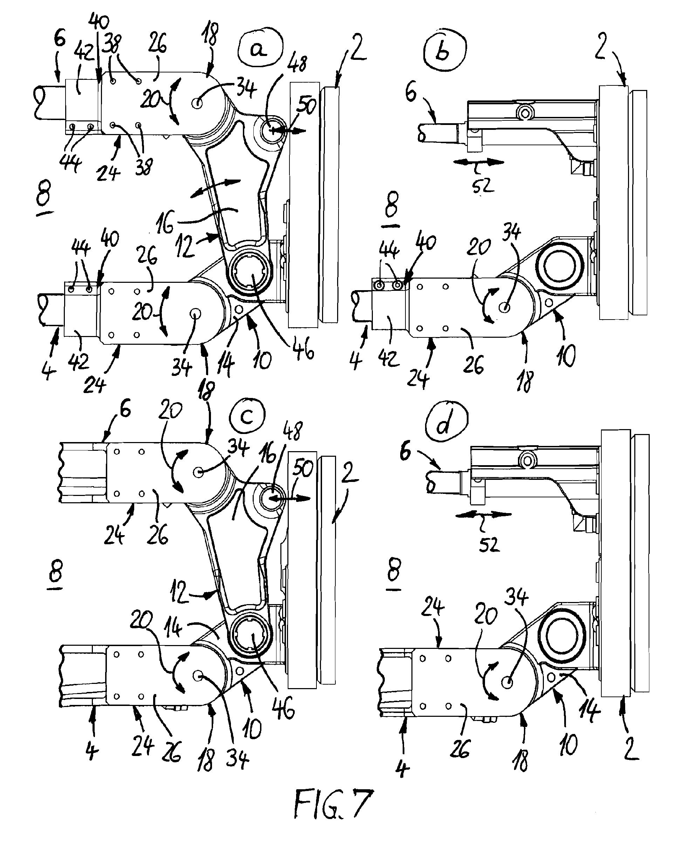

Für eine Ausgestaltung der Schweißzange 1 als L- oder X-Zange ist das Anschlussteil 14 für den Fix-Elektrodenarm 4 zur starren Verbindung mit der Grundkörpereinheit 2 ausgelegt. Hierzu wird insbesondere auf die Fig. 5 und 6 verwiesen. Das andere Anschlussteil 16 - siehe hierzu insbesondere Fig. 4 - bildet einen Schwenkhebel, der mit seinem dem Verbindungsende 22 gegenüberliegenden Ende über ein Schwenklager 46 an dem ortsfesten Anschlussteil 14 verschwenkbar gelagert ist. In der Nähe des Verbindungsendes 22 greift über ein Verbindungslager 48 ein nicht dargestellter Antriebszylinder der Grundkörpereinheit 2 an; der Antrieb erfolgt dann in Richtung der Doppelpfeile 50 z. B. in Fig. 7 a und c.

Bei der alternativen Ausgestaltung der Schweißzange 1 als C-Zange gemäß Fig. 7 b und d entspricht die Halterung des Fix-Elektrodenarms 4 derjenigen gemäß Fig. 7a und c. Der bewegliche Move-Elektrodenarm 6 wird allerdings direkt linear in Pfeilrichtung 52 durch einen Zylinder angetrieben. Dabei sind in diesem Beispiel keine Winkeleinstellmittel 18 im Bereich des Elektrodenarms 6 vorgesehen.

Wie sich noch insbesondere aus Fig. 2 und 3 ergibt, können Stromleiter 54 für den Schweißstrom aus der Grundkörpereinheit 2 über den Bereich der Winkeleinstellmittel 18 geführt und direkt an dem Verbindungsende 24 des Elektrodenarms 4, 6 bzw. des Adapterteils 40 angeschlossen sein.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Elektrodenarm-Anordnung für eine Schweißzange (1) mit zwei zwischen sich ein Zangenfenster (8) begrenzenden Elektrodenarmen (4, 6), wobei jeder Elektrodenarm (4, 6) ein Anschlussende (10, 12) zur Befestigung an einer Grundkörpereinheit (2) der Schweißzange (1) aufweist,
**dadurch gekennzeichnet, dass** zumindest bei einem der Elektrodenarme (4/6) das Anschlussende (10/12) als separates Anschlussteil (14/16) ausgebildet ist, wobei der Elektrodenarm (4/6) mit dem Anschlussteil (14/16) derart über Winkeleinstellmittel (18) verbunden oder verbindbar ist, dass das Zangenfenster (8) bezüglich Form und/oder Größe variabel ist.

2. Elektrodenarm-Anordnung nach Anspruch 1,
**dadurch gekennzeichnet, dass**dieWinkeleinstellmittel(18)mit Kraft- und/oder Formschlussverbindung zur stufenlosen oder stufigen Winkeleinstellung um senkrecht zu einer von den Elektrodenarmen (4, 6) definierten Zangenebene verlaufende Stellachsen ausgebildet sind.

3. Elektrodenarm-Anordnung nach Anspruch 1 oder 2,
**dadurch gekennzeichnet, dass** das Anschlussteil (14/16) ein Verbindungsende (22) aufweist, welches mit einem im Querschnitt bevorzugt etwa rechteckigen Verbindungsende (24) des Elektrodenarms (4/6) über zwei gegenüberliegende, parallel gegeneinander verspannbare Klemmplatten (26) verbunden oder verbindbar ist.

4. Elektrodenarm-Anordnung nach Anspruch 3,
**dadurch gekennzeichnet, dass** jedeKlemmplatte(26)mitdem Verbindungsende (22) des Anschlussteils (14/16) formschlüssig über korrespondierende, ineinandergreifende Verzahnungen (30) zur stufigen Winkeleinstellung verbunden oder verbindbar ist.

5. Elektrodenarm-Anordnung nach Anspruch 3 oder 4,
**dadurch gekennzeichnet, dass** jedeKlemmplatte(26)mitdem Verbindungsende (24) des Elektrodenarms (4/6) formschlüssig über korrespondierende, ineinandergreifende Passmittel (36) zur Kippmomentaufnahme spielfrei verbunden oder verbindbar ist.

6. Elektrodenarm-Anordnung nach einem der Ansprüche 3 bis 5,
**dadurch gekennzeichnet, dass** das Verbindungsende (24) des Elektrodenarms (4/6) Bestandteil eines separaten Adapterteils (40) ist.

7. Elektrodenarm-Anordnung nach Anspruch 6,
**dadurch gekennzeichnet, dass** dasAdapterteil(40)aufseiner dem Verbindungsende (24) gegenüberliegenden Seite einen Armanschluss (42) insbesondere in Form einer Steckaufnahme für den mit vorzugsweise kreisförmigem Querschnitt ausgebildeten Elektrodenarm (4/6) ausweist.

8. Elektrodenarm-Anordnung nach einem der Ansprüche 4 bis 7,
**dadurch gekennzeichnet, dass** die Verzahnungen (30) des Verbindungsendes (22) des Anschlussteils (14/16) und der Klemmplatten (26) für einen spielfreien Eingriff im verspannten Zustand ausgelegt sind.

9. Elektrodenarm-Anordnung nach einem der Ansprüche 4 bis 8,
**dadurch gekennzeichnet, dass** das Anschlussteil (14/16) gänzlich oder zumindest im Bereich des Verbindungsendes (22) aus einem relativ weichen, plastisch verformbaren Metall, bevorzugt Kupfer, besteht, wobei die Verzahnungen (30) derart dimensioniert sind, dass beim Verspannen der Klemmplatten (26) durch plastische Verformung eine Spielfreiheit der Verzahnungen (30) erreicht wird.

10. Schweißzange (1) mit einer Elektrodenarm-Anordnung nach einem der Ansprüche 1 bis 9.

11. Schweißzange nach Anspruch 10 in einer Ausgestaltung als L- oder X-Zange, wobei der eine Elektrodenarm (4) als relativ zu der Grundkörpereinheit (2) feststehender Fix-Arm und der andere Elektrodenarm (6) als verschwenkbar gelagerter und antreibbarer Move-Arm ausgebildet sind, wobei vorzugsweise beide Elektrodenarme (4, 6) mit Winkeleinstellmitteln (18) ausgestattet sind.

12. Schweißzange nach Anspruch 10 in einer Ausgestaltung als C-Zange, wobei der eine Elektrodenarm (4) als relativ zu der Grundkörpereinheit (2) feststehender Fix-Arm und der andere Elektrodenarm (6) als längsbeweglich gelagerter und antreibbarer Move-Arm ausgebildet sind, wobei vorzugsweise nur der Fix-Arm (4) die Winkeleinstellmittel (18) aufweist.

13. Anschlussteil (14/16) für einen Elektrodenarm (4/6) einer Elektrodenarm-Anordnung nach einem der Ansprüche 1 bis 9.

14. Winkeleinstellmittel (18) für eine Elektrodenarm-Anordnung nach einem der Ansprüche 1 bis 9.

15. Adapterteil (40) für eine Elektrodenarm-Anordnung nach einem der Ansprüche 6 bis 9.
